Europäisches Patentamt

European Patent Office

Office européen des brevets

(19)

(11) EP 0 937 933 B1

(12) FASCICULE DE BREVET EUROPEEN

(45) Date de publication et mention
de la délivrance du brevet:
08.01.2003 Bulletin 2003/02

(51) Int Cl.⁷: **F16L 11/14**, F16L 11/08,
F16L 9/147

(21) Numéro de dépôt: 98403045.2

(22) Date de dépôt: 04.12.1998

(54) **Conduite flexible pour grande profondeur**

Flexible Rohrleitung für grosse Tiefen

Flexible pipe for great depths

(84) Etats contractants désignés:
**DK FR GB**

(30) Priorité: **18.02.1998 FR 9801968**

(43) Date de publication de la demande:
**25.08.1999 Bulletin 1999/34**

(73) Titulaire: **COFLEXIP**
**92973 Paris La Defense (FR)**

(72) Inventeurs:
• **Jung, Patrice**
**76940 La Mailleraye sur Seine (FR)**

• **Maloberti, René Antoine**
**94500 Champigny sur Marne (FR)**
• **Do, Ahn Tuan**
**95240 Cormeilles en Parisis (FR)**

(74) Mandataire: **Levy, David et al**
**c/o S.A. FEDIT-LORIOT & AUTRES**
**CONSEILS EN PROPRIETE INDUSTRIELLE**
**38, Avenue Hoche**
**75008 Paris (FR)**

(56) Documents cités:
**FR-A- 1 477 478**     **FR-A- 2 458 022**
**GB-A- 1 511 630**

Printed by Jouve, 75001 PARIS (FR)

# Description

La présente invention concerne une conduite flexible pour grande profondeur, renforcée par des armures et adaptée au transport d'effluents sous pression. La structure selon la présente invention est particulièrement adaptée aux conduites flexibles du type "flow line", c'est-à-dire des conduites flexibles déroulées à partir d'un bateau pour être posées généralement sur le fond de la mer et connectées aux installations sous-marines et qui travaillent principalement en statique.

Les conduites flexibles, utilisées en mer, sont soumises à divers types de sollicitations extérieures.

Les conduites flexibles, conçues pour être utilisées, en mer peu profonde ou à des profondeurs moyennes (typiquement entre 100 et 800 m), présentent des structures qui peuvent varier dans de larges limites, en fonction des conditions d'utilisation.

Les conduites flexibles les plus utilisées dans une exploitation pétrolière sont en général du type non liées (unbonded en anglais) dans lesquelles les différentes couches successives et distinctes présentent une certaine liberté de se déplacer l'une par rapport à l'autre, et elles comprennent de l'intérieur vers l'extérieur, une carcasse constituée par exemple d'un feuillard agrafé qui sert à empêcher l'écrasement de la conduite sous pression externe, une gaine d'étanchéité interne en polymère, une voûte de pression constituée par au moins un fil de forme agrafé, et enroulé selon une spirale à faible pas, des armures dites de traction dont l'angle d'armage, mesuré sur l'axe longitudinal de la conduite est inférieur à 55°, et enfin une gaine d'étanchéité externe en polymère. Une telle conduite flexible est désignée comme étant un flexible "Rough bore".

Lorsqu'une conduite flexible comprend de l'intérieur vers l'extérieur, une gaine d'étanchéité interne, une voûte de pression constituée par des fils de forme enroulés à pas court et destinée à supporter les contraintes radiales provoquées par la circulation des effluents dans la conduite flexible, une gaine anti-collapse, une ou plusieurs armures de traction et de pression enroulées autour de la gaine anti-collapse et une gaine d'étanchéité externe en polymère, elle est appelée "Smooth-bore".

Les éléments constitutifs de ces diverses structures sont définis dans les documents API 17B et 17J établis par l'American Petroleum Institute sous l'intitulé "Recommended Practice for Flexible Pipe".

Dans une variante, la conduite flexible ne comprend pas de voûte de pression et les nappes d'armures sont spiralées à pas inverse avec des angles d'armage voisins de 55°. Dans ce cas, les pressions interne et externe ainsi que les efforts de traction s'exercent ou sont retenus par ces nappes d'armures ; une telle conduite est dite équilibrée.

Des exemples de structures de conduites flexibles sont décrits par exemple dans FR-A-2 619 193 et FR-A-2 557 254.

Dans FR-A-2 619 193, il est proposé une conduite flexible dont les variations dimensionnelles, notamment dans le sens axial, peuvent être contrôlées de manière à présenter lors d'une mise en pression interne élevée, une stabilité dimensionnelle ou un raccourcissement contrôlé.

Dans FR-A-2 557 254, la conduite flexible est prévue pour ne pas présenter une variation notable de longueur lorsqu'elle est soumise à une pression interne avec "effet de fond direct" qui est induit par la pression régnant dans la conduite flexible.

Dans les conduites flexibles actuellement disponibles, les armures sont calculées pour résister à toutes les sollicitations qu'elles subissent lors de la fabrication, le transport, la pose, le service et la récupération. Notamment, elles doivent résister aux contraintes de traction lors de la pose de la conduite flexible, induites par le poids total de la conduite flexible, et aux contraintes de pression pour résister aux pressions interne et externe. Les efforts circonférentiels sont généralement absorbés par une voûte de pression lorsqu'elle existe dans la conduite flexible. Dans ces conditions. les concepteurs recherchent un compromis structurel sans se préoccuper de savoir si chacun des éléments constitutifs de la structure participe à une ou plusieurs fonctions, comme c'est le cas par exemple des armures à 55° qui retiennent aussi bien les efforts de traction que les pressions interne et externe subies par lesdites conduites flexibles.

Les sollicitations extérieures encore dénommées cas de chargement par les spécialistes peuvent être classées en deux principales catégories.

La première catégorie concerne la pose de la conduite flexible depuis la surface jusqu'au fond de la mer. Dans ce cas, le poids de ladite conduite immergée développe une contrainte de traction.

La deuxième catégorie concerne les conditions d'utilisation de ladite conduite c'est-à-dire posée sur le fond marin après raccordement avec l'équipement de fond. Dans ce cas, les sollicitations subies par la conduite flexible sont dues essentiellement aux différences de pression entre la pression interne $P_{int}$ régnant à l'intérieur de la conduite flexible et la pression extérieure $P_{ext}$ s'exerçant sur ladite conduite flexible et égale à la pression de la colonne d'eau située au-dessus de ladite conduite flexible.

Lorsque la différence $\Delta P = (P_{int} - P_{ext})$ est positive, les contraintes induites dans la conduite flexible sont radiales et longitudinales, les deux contraintes étant considérées comme positives parce qu'elles sont dirigées vers l'extérieur de la conduite. La contrainte radiale se manifeste par un gonflement alors que la contrainte longitudinale se manifeste par un allongement de la conduite flexible.

Lorsque la différence $\Delta P = (P_{int} - P_{ext})$ est négative ce qui correspond sensiblement à une conduite vide au fond de la mer, les contraintes sont considérées comme étant négatives parce qu'elles sont dirigées vers l'intérieur de la conduite. La contrainte radiale se manifeste par une compression et la contrainte longitudinale se manifeste par un raccourcissement de ladite conduite flexible.

Les contraintes longitudinales, dans les deux cas où la différence ΔP est positive ou négative, sont des contraintes de traction.

L'effet de fond T induit dans une conduite flexible dépend entre autre de la différence de pression ΔP =($P_{int}$ - $P_{ext}$) et des rayons interne et externe de ladite conduite.

Lorsque T est positif, l'effet de fond est dit effet de fond direct.

Lorsque T est négatif, l'effet de fond est dit effet de fond inverse.

Jusqu'à une certaine profondeur, l'effet de fond inverse a peu de conséquences dommageables pour la conduite. Par contre, pour de grandes profondeurs d'eau, supérieures à 1200 m par exemple, l'effet de fond inverse peut avoir de graves conséquences qui peuvent aller jusqu'à la détérioration de la conduite flexible. En effet, lorsque T est fortement négatif, les contraintes de compression axiales dans les armures deviennent importantes et alors le diamètre de l'hélice de l'enroulement a tendance à augmenter inconsidérément. Mais comme les armures sont retenues par la gaine extérieure d'étanchéité et éventuellement par un rubanage autour desdites armures, le gonflement est limité entre des valeurs acceptables. Toutefois, au-delà d'une certaine valeur de contrainte, il peut se produire une déformation plastique locale de fils d'armures dont la conséquence est la détérioration irréversible de la conduite flexible.

Lorsqu'il se produit une rupture de la gaine externe, pour quelque raison que ce soit, la pression dans l'annulaire augmente et devient égale à la pression extérieure qui s'exerce sur la conduite flexible. A 1800 m de profondeur, la pression extérieure est égale à environ 180 bar. Les armures qui subissent cette pression externe ont tendance à se vriller. Si maintenant, la pression interne, qui était par exemple de 300 bar, chute à un bar, les armures étant gonflées en raison de la compression due à la pression externe de 180 bar, elles peuvent se déformer en "cage d'oiseau".

Le document FR-A- 2756 605 décrit une conduite flexible qui remédie aux inconvénients des conduites flexibles décrites dans FR-A-2 458 022, WO-96/17198 ou GB-A-1 486 445 et qui comprend, de l'intérieur vers l'extérieur, un tube onduleux interne métallique, une voûte de pression, une gaine polymérique anti-collapse, deux nappes d'armures enroulées avec un angle d'armage inférieur à 55° par rapport à l'axe longitudinal de la conduite, une bande de renfort et enfin une gaine d'étanchéité externe. Le tube interne ou liner présente des ondulations qui sont espacées sur toute la longueur et qui sont en correspondance avec la surface intérieure de la voûte de pression.

La conduite flexible décrite dans ce document constitue une solution satisfaisante en ce qui concerne la corrosion à l'$H_2$S car le liner constitue une barrière efficace à la diffusion des gaz pour des effluents diphasiques du type pétrole brut ("life crude" en anglais). Mais elle ne résout pas la question de l'effet de fond inverse, car ni la gaine anti-collapse ni la gaine de renfort ne permet de réduire de manière importante les conséquences d'un effet de fond inverse pour des grandes profondeurs.

La présente invention a pour but de proposer une nouvelle structure pour une conduite flexible qui permet de s'opposer efficacement à l'effet de fond inverse.

La présente invention a pour objet une conduite flexible du type comprenant, de l'intérieur vers l'extérieur, un tube métallique interne ondulé et étanche aux gaz, une voûte de pression présentant une surface interne qui est en correspondance avec les ondulations dudit tube interne ondulé, au moins deux groupes d'armures intérieur et extérieur, dont l'angle d'armage est inférieur à 55° et une gaine externe d'étanchéité, caractérisée en ce qu'une gaine intermédiaire étanche est disposée entre les deux groupes d'armures, ledit groupe d'armures intérieur étant en appui direct sur la voûte de pression.

Un avantage de la présente invention réside dans le fait que la conduite flexible résiste bien à l'effet de fond inverse et ce, bien qu'on ait éliminé, d'une part, la gaine anti-collapse et, d'autre part, la bande de renfort qui est habituellement disposée entre la gaine externe d'étanchéité et le groupe d'armures extérieur.

En effet, lorsqu'à la suite d'un accident quelconque, la gaine externe d'étanchéité est endommagée, la pression extérieure s'exerçant sur ladite conduite flexible et qui peut atteindre 180 bar pour une profondeur de 1 800 m environ est transmise au groupe d'armures extérieur, laquelle pression est transmise à la gaine intermédiaire. Mais comme cette dernière constitue une barrière étanche pour le groupe d'armures intérieur, l'eau qui a pénétré dans le groupe d'armures extérieur n'est pas diffusée dans le groupe d'armures intérieur, ce qui évite le gonflement des nappes d'armures constituant ledit groupe intérieur et leur déformation en "cage d'oiseau" et ce, en raison du fait que la gaine intermédiaire étanche se plaque contre le groupe d'armures intérieur sous l'effet de la pression d'eau ; de ce fait, le risque de gonflement en "cage d'oiseau" du groupe d'armures extérieur est éliminé.

Selon un exemple de réalisation de la présente invention, le groupe d'armures intérieur est enroulé avec un angle d'armage supérieur à 35° alors que le groupe d'armures extérieur est enroulé avec un angle d'armage inférieur à 30°, la différence entre les angles d'armage étant supérieure à 5°, et de préférence, comprise entre 10 et 15°.

Un autre avantage de la présente invention réside dans le fait qu'on peut mieux séparer la fonction de résistance à la traction développée lors de la pose de la conduite flexible sur le fond marin, de la fonction de résistance aux pressions externe et interne développées lorsque la conduite flexible est en service. Bien entendu, la reprise des contraintes de traction n'est pas totalement assurée par le groupe d'armures extérieur à faible angle d'armage, car il est évident, pour des raisons structurelles et physiques, que l'autre groupe d'armures participe également à la résistance auxdites contraintes de traction. De la même manière, une très faible partie des contraintes dues aux pressions externe et interne de la conduite flexible est transmise au groupe d'armures extérieur.

Dans le calcul des armures, il faut également tenir compte des tolérances de fabrication et de la nature des matériaux utilisés pour la réalisation des conduites flexibles.

D'autres avantages ressortiront mieux à la lecture d'un mode de réalisation préféré de l'invention, ainsi que des dessins annexés sur lesquels :

- la figure 1 est une vue partielle arrachée en perspective d'une conduite flexible selon l'invention ;
- la figure 2 représente des courbes de $\sigma_1/\sigma_2$ en fonction de $e_2E_2/e_1E_1$ pour différents angles d'armage $\alpha_2$ ;
- la figure 3 représente des courbes de $\sigma_1/\sigma_2$ en fonction de $e_2E_2/e_vE_v$ pour des valeurs $\alpha_1$ et $\alpha_2$ constantes avec $e_1E_1/e_vE_v$ variable.

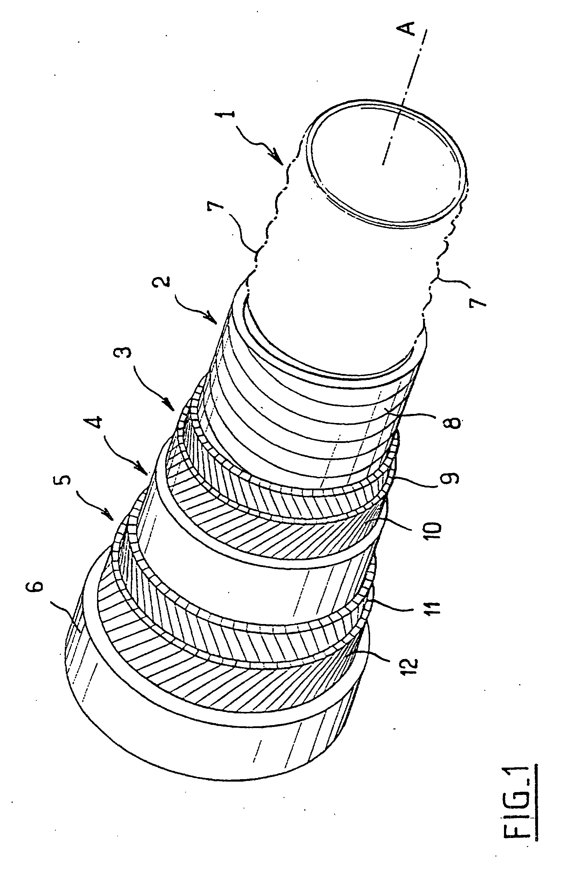

La conduite flexible telle que représentée sur la figure 1, comprend, de l'intérieur vers l'extérieur, un tube onduleux interne métallique 1, dénommé comme étant un liner, une voûte de pression 2, un premier groupe d'armures intérieur 3, une gaine intermédiaire étanche 4, un deuxième groupe d'armures extérieur 5 et une gaine externe d'étanchéité 6, par exemple polymérique.

Le tube onduleux métallique 1 ou liner présente des ondulations 7 régulièrement espacées sur toute la longueur, la périodicité des crêtes des ondulations ou des creux étant définie, pour des raisons de commodité, par une période L, encore qu'on puisse également la désigner par le terme de pas qui est utilisé pour les enroulements des groupes d'armures intérieur et extérieur 3 et 5.

La voûte de pression 2 est constituée, par exemple, par un enroulement hélicoïdal à faible pas d'un fil de forme 8 autour du liner 1, l'angle de l'hélice formé par l'enroulement étant proche de 90° par rapport à l'axe longitudinal A de ladite conduite. L'enroulement de la voûte de pression peut constituer ce qu'il est convenu d'appeler un groupe d'armures même s'il s'agit d'une seule couche d'enroulement. Le fil de forme 8 comprend sur sa surface interne des parties arrondies concaves et convexes de façon à ce qu'elles soient en correspondance avec les parties convexes et concaves des ondulations du liner métallique 1, ainsi que cela est expliqué en détail dans la demande FR-9614892 qui est intégrée dans la présente description.

La conduite flexible ne comprend pas de gaine anti-collapse entre le groupe d'armures intérieur 3 et la voûte de pression 2, ledit groupe d'armures 3 intérieur reposant directement sur ladite voûte de pression 2. De plus, la gaine externe d'étanchéité 6 repose directement sur le groupe d'armures extérieur 5 sans interposition d'une bande de renfort enroulée sur ledit groupe d'armures extérieur 5. Le fait d'avoir éliminé la gaine anti-collapse et la bande de renfort et d'avoir inséré une gaine intermédiaire étanche 4, polymérique par exemple, entre les deux groupes d'armures 3 et 5, a permis, d'une manière inattendue et surprenante, de constater que la conduite flexible selon l'invention permettait de s'opposer efficacement à l'effet de fond inverse ; c'est ainsi que malgré une déchirure effectuée sur la gaine externe. d'étanchéité 6 et l'application d'une différence de pression $\Delta P = (P_{int} - P_{ext})$ négative dont la valeur absolue est égale à 100 bar, le groupe d'armures intérieur 3 ne se déformait pas en "cage d'oiseau" et que le gonflement dudit groupe d'armures 3 restait maintenu dans des limites acceptables, empêchant ainsi le gonflement du groupe d'armures extérieur 5.

Il faut noter que la gaine intermédiaire étanche 4 joue également le rôle de gaine anti-collapse, s'opposant efficacement à l'aplatissement de la conduite flexible.

Le premier groupe d'armures 3 est constitué de préférence par au moins deux nappes d'armures 9 et 10, enroulées en sens inverse suivant un enroulement hélicoïdal à pas court dont l'angle d'armage, défini par rapport à l'axe longitudinal A de la conduite, est supérieur à 35° et de préférence; compris entre 35° et 45°. Ces nappes d'armures 9 et 10 ont pour fonction principale de résister aux pressions externe et interne de la conduite flexible, même si elles participent à la résistance à d'autres contraintes qui se développent dans la conduite flexible, comme par exemple, lors de la pose sur le fond marin. Bien entendu, lesdites nappes d'armures 9 et 10 seront calculées et réalisées dans des matériaux appropriés pour un bon fonctionnement en fonction de l'effluent qui circulera dans ladite conduite flexible et de la profondeur d'eau à laquelle ladite conduite flexible reposera.

La conduite flexible comprend deux annulaires, un annulaire intérieur et un annulaire extérieur.

Un annulaire est l'espace compris entre deux gaines tubulaires concentriques étanches.

L'annulaire intérieur est délimité par le liner métallique étanche 1 et la gaine intermédiaire étanche 4, et comprend la voûte de pression 2 et le groupe d'armures intérieur 3 constitué par les deux nappes d'armures 9, 10.

L'annulaire extérieur est délimité par la gaine intermédiaire étanche 4 et la gaine externe d'étanchéité 6, et comprend le groupe d'armures extérieur 5 constitué par les deux nappes d'armures 11, 12.

Tant que la conduite flexible est pleine par un fluide tel que l'effluent qui circule à l'imtérieur, les contraintes radiales sont reprises par la voûte de pression 2 ; les contraintes de traction dues à un allongement ou à un raccourcissement de ladite conduite, sont reprises par la paire de nappes d'armures intérieures 9 et 10. Or, le fait d'effectuer un enroulement à pas court sur ladite paire de nappes d'armures rend cette dernière apte à résister auxdites contraintes de traction. Avec un angle d'armage de 35° et de préférence inférieur à 45°, on est assuré que les contraintes de traction développées par les efforts conjugués des pressions interne et externe, lorsque la conduite flexible est en service, seront supportées presque en totalité, par les nappes d'armures intérieures 9 et 10.

Pour faire en sorte que les contraintes de traction dites de pose, c'est-à-dire développées lors de la pose de la conduite flexible sur le fond marin, ne soient pas supportées en totalité par les nappes d'armures 9 et 10, on peut réaliser le deuxième groupe d'armures 5 de telle sorte qu'il reprenne une partie plus ou moins importante des contraintes de traction de pose. A cet effet, le groupe d'armures extérieur 5 est constitué par au moins un enroulement hélicoïdal dont l'angle d'armage est inférieur à 30° et, dans ce cas, l'enroulement est effectué, de préférence, dans le même sens que la nappe d'armures 9. De préférence, le groupe d'armures extérieur 5 est constitué par au moins une paire de nappes d'armures 11 et 12, le sens d'enroulement du fil d'armure de la nappe 11 étant le même que celui de la nappe 9 alors que le sens d'enroulement du fil d'armure de la nappe 12 est, de préférence, le même que celui de la nappe 10.

Les deux nappes d'armures 11 et 12 sont enroulées en conséquence en sens inverses, avec chacune un angle d'armage inférieur à 30° et de préférence compris entre 15 et 30°.

Pour déterminer les proportions de reprise de la traction de pose entre les deux groupes d'armures intérieur 9 et 10 et extérieur 11 et 12, le critère à retenir est le rapport des contraintes $\sigma_1/\sigma_2$ existant dans le groupe d'armures intérieur 9 et 10 sur celles existant dans le groupe d'armures extérieur 11, 12.

D'une manière générale et en simplifiant les calculs, on peut valablement retenir que

$$\frac{\sigma_1}{\sigma_2} = \frac{E_1 \cos^2 \alpha_1}{E_2 \cos^2 \alpha_2} = \left[\frac{1 + k \, \text{tg}^2 \, \alpha_1}{1 + k \, \text{tg}^2 \, \alpha_2}\right]$$

Dans cette formule :

$\sigma_1$ est la contrainte de traction dans les nappes d'armures 9 et 10,

$\sigma_2$ est la contrainte de traction dans les nappes d'armures 11 et 12,

$E_1$ est le module d'élasticité du matériau des nappes d'armures 9 et 10 supposées réalisées avec un même matériau,

$E_2$ est le module d'élasticité du matériau des nappes d'armures 11 et 12 supposées réalisées avec un même matériau,

$\alpha_1$ est l'angle d'armage des nappes d'armures 9 et 10,

$\alpha_2$ est l'angle d'armage des nappes d'armures 11 et 12,

K est un nombre qui dépend des angles d'armage et des raideurs $e_iE_i$ de la voûte de la pression et des groupes d'armures intérieur et extérieur ; $e_i$ est l'épaisseur équivalente de la nappe i considérée.

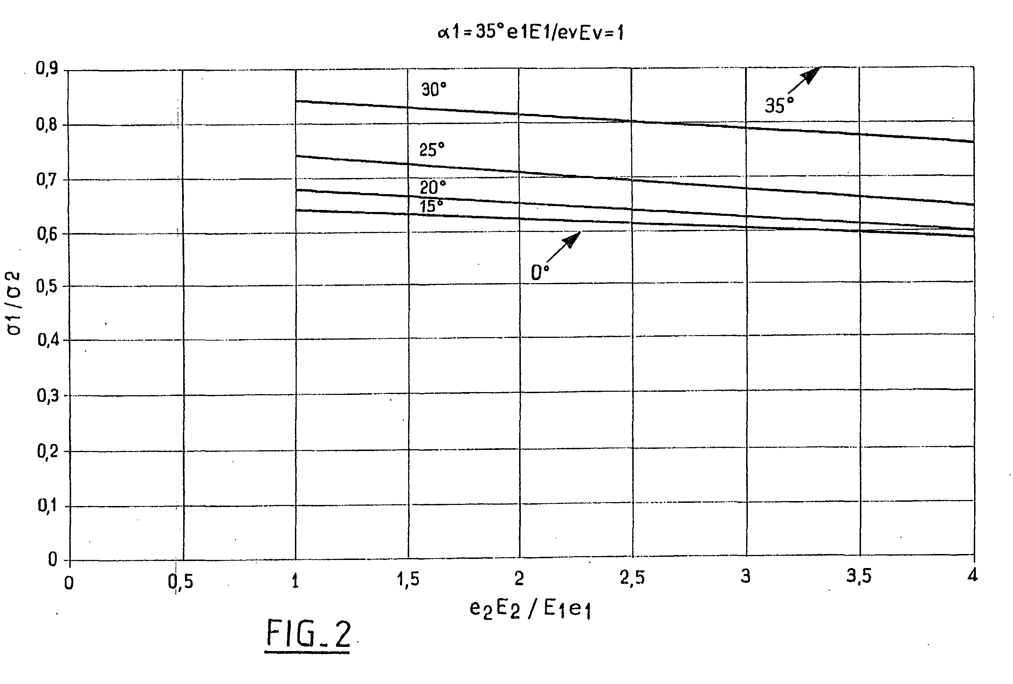

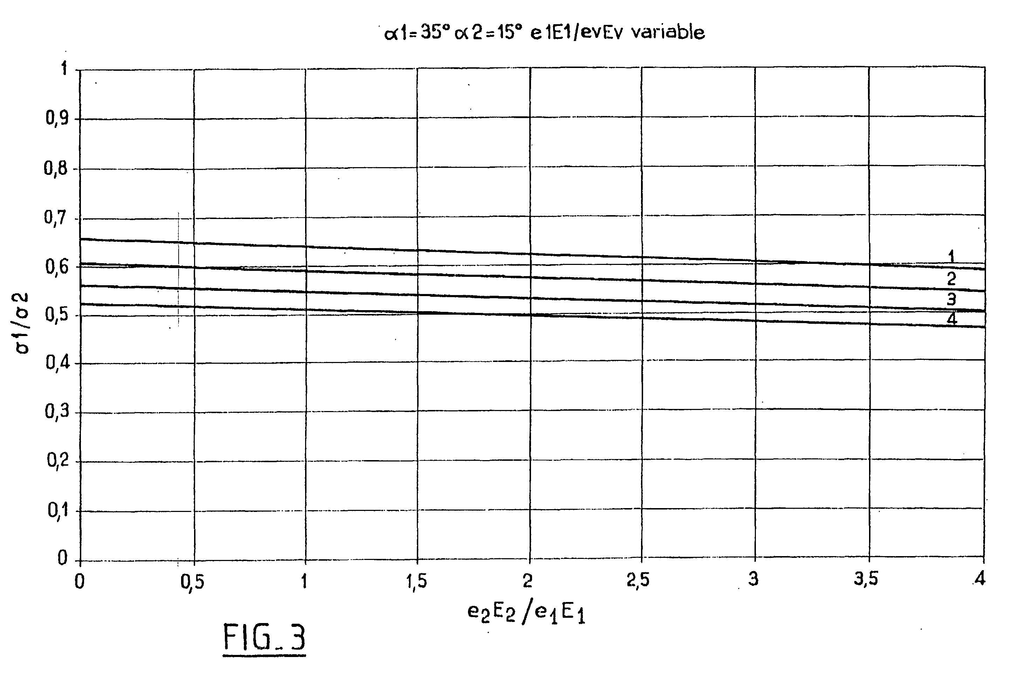

Sur les figures 2 et 3, on a représenté des courbes du rapport $\sigma_1/\sigma_2$ en fonction du rapport des raideurs $e_2E_2/e_1E_1$ et $e_2E_2/e_vE_v$.

Les courbes de la figure 2 ont été calculées en supposant que l'angle d'armage $\alpha_1$ des nappes d'armures 9 et 10 est égal à 35° et que le rapport de la raideur $e_1E_1$ des nappes d'armures 9 et 10 sur la raideur $e_vE_v$ de la voûte de pression 2 est égal à 1 et ce, pour différents angles d'armage $\alpha_2$ des nappes d'armures 11 et 12.

On constate que plus l'angle d'armage $\alpha_2$ est grand et moins les nappes d'armures 11 et 12 reprennent la traction de pose. Un bon compromis est atteint lorsque le rapport des raideurs $e_2E_2/e_1E_1$ est égal à 2 avec un angle d'armage $\alpha_1 = 20°$. Dans ce cas, les nappes d'armures 11 et 12 reprennent environ 35 % de la traction de pose, le reste (65 % environ ) étant repris par les nappes d'armures 9 et 10.

Lorsqu'on fixe $\alpha_1$ et $\alpha_2$ respectivement égaux à 15° et 35° et qu'on fait varier le rapport des raideurs $e_1E_1/e_vE_v$ entre 1 et 4, on constate que pour un rapport $e_2E_2/e_vE_v$ égal à 2 et un rapport $e_1E_1/e_vE_v$ égal à 4, il est possible d'avoir 50 % de la traction de pose qui est reprise par les nappes d'armures 11 et 12 (figure 3).

Ainsi, pour obtenir une valeur de contrainte de pose la plus faible possible dans les nappes d'armures 9 et 10, on peut cumuler les points suivants :

- choisir un angle d'armage $\alpha_2$ faible pour les nappes d'armures 11 et 12, par exemple égal à 15°.
- choisir des rapports de raideur élevés pour

$$\frac{E_1e_1}{E_ve_v} \text{ et } \frac{E_2e_2}{E_ve_v}$$

Pour cela, on peut soit augmenter les épaisseurs équivalentes $e_1$, $e_2$ des armures par rapport à l'épaisseur équivalente $e_v$ de la voûte de pression 2, soit en prenant des matériaux à haut module d'élasticité $E_i$ pour les armures. Cependant, si on choisit un seul des deux modules plus élevé que celui de la voûte de pression, il est préférable de sélectionner le module $E_2$ car le rapport $E_1/E_2$, intervenant dans la formule de $\sigma_1/\sigma_2$, fera davantage baisser le rapport de contraintes $\sigma_1/\sigma_2$.

On peut utiliser le carbone comme matériau pour les nappes d'armures 11 et 12, ou encore un aramide ou un polyaramide.

Pour une armure réalisée par exemple en carbone et dont le module d'élasticité E de ladite armure est de 250 000 MPa, avec une épaisseur équivalente e de 1,5 mm, on obtient une raideur eE = 1,5 x 250 000 = 375 000, alors que la raideur $e_v E_v$ d'une voûte de pression réalisée par exemple en aluminium par enroulement à 83,5 ° d'un fil de forme agrafé, de module d'élasticité $E_v$ = 50 000 MPa et d'épaisseur équivalente $e_v$ = 5 mm, est égale à 5 x 50 000 = 250 000. L'épaisseur équivalente est définie par le rapport S/p dans lequel S est la section du fil et p le pas d'enroulement.

Dans ces conditions, on choisira, pour les nappes d'armures 11 et 12, un matériau qui est le plus raide et le plus léger possible, de manière à alléger la conduite flexible tout en lui conférant les caractéristiques mécaniques appropriées aux différents types d'utilisation.

Comme la conduite flexible est du type non lié (unbonded en anglais), il existe des jeux entre les divers éléments constitutifs. Ces jeux peuvent changer les contraintes dans la conduite flexible. C'est ainsi que les jeux existant, d'une part, entre la première nappe d'armures 9 et la voûte de pression 2 et, d'autre part, entre les nappes d'armures 9 et 10, ont tendance à diminuer le rapport des contraintes $\sigma_1/\sigma_2$, alors que les jeux existant entre la nappe d'armures 11 et la gaine intermédiaire étanche 4 d'une part, et entre les nappes d'armures 11 et 12, d'autre part, ont tendance à augmenter le rapport $\sigma_1/\sigma_2$. De ce fait, il est recommandé de diminuer autant que faire se peut, les jeux entre les nappes d'armures 11 et 12 et entre la nappe d'armures 11 et la gaine intermédiaire 4.

## Revendications

1. Conduite flexible comprenant, de l'intérieur vers l'extérieur, un tube métallique interne ondulé et étanche (1), une voûte de pression (2) enroulée à faible pas présentant une surface interne qui est en correspondance avec les ondulations dudit tube interne ondulé, une gaine intermédiaire, au moins deux groupes d'armures intérieur et extérieur (3, 5), lesdites armures étant enroulées suivant un angle d'armage inférieur à 55° et une gaine externe d'étanchéité (6), **caractérisée en ce que** la gaine intermédiaire (4) est étanche et elle est disposée entre les deux groupes d'armures (3, 5), ledit groupe d'armures intérieur (3) étant en appui direct sur la voûte de pression (2).

2. Conduite selon la revendication 1, **caractérisée en ce que** le groupe d'armures intérieur (3) est enroulé avec un angle d'armage supérieur à 35°.

3. Conduite flexible selon la revendication 2, **caractérisée en ce que** le groupe d'armures intérieur (3) est constitué par au moins deux nappes d'armures (9, 10) enroulées dans des sens opposés, l'angle d'armage de chaque nappe d'armures étant supérieur à 35°.

4. Conduite flexible selon la revendication 1, **caractérisée en ce que** le groupe d'armures extérieur (5) est enroulé avec un angle d'armage inférieur à 30°.

5. Conduite flexible selon les revendications 1 et 4, **caractérisée en ce que** le groupe d'armures extérieur (5) est constitué par au moins une nappe d'armures (11) dont le sens d'enroulement est le même que la nappe d'armures (9) en appui sur la voûte de pression (2).

6. Conduite flexible selon la revendication 4, **caractérisée en ce que** le groupe d'armures extérieur (5) est constitué par au moins deux nappes d'armures enroulées dans des sens opposés, l'angle d'armage de chaque nappe d'armures étant inférieur à 30°.

7. Conduite flexible selon les revendications 3 et 6, **caractérisée en ce que** les sens d'enroulement des nappes (11, 12) du groupe d'armures extérieur (5) sont respectivement les mêmes que les sens d'enroulement des nappes (9, 10) du groupe d'armures intérieur (3).

8. Conduite flexible selon l'une des revendications 1, 4 ou 5, **caractérisée en ce que** le groupe d'armures extérieur (5) est constitué par un enroulement d'un fil de carbone ou fil en aramide ou polyaramide.

9. Conduite flexible selon l'une des revendications précédentes, **caractérisé en ce que** la raideur du matériau utilisé pour le groupe d'armures extérieur (5) est supérieure à la raideur du matériau utilisé pour le groupe d'armures intérieur (3).

10. Conduite flexible selon la revendication 9, **caractérisée en ce que** le rapport desdites raideurs est supérieur ou égal à 1 et de préférence compris entre 1 et 4.

11. Conduite flexible selon la revendication 1, **caractérisée en ce que** le matériau de la gaine intermédiaire étanche (4) est polymérique.

## Patentansprüche

1. Flexible Rohrleitung, bestehend von innen nach außen aus einem gewellten und dichten inneren Metallrohr (1), aus einem mit geringer Steigung gewikkelten Druckgewölbe (2), dessen Innenfläche sich an die Wellungen des genannten gewellten inneren Metallrohrs anschließt, aus einer Zwischenhülse (4), aus mindestens zwei Bewehrungsgruppen, einer inneren und einer äußeren (3, 5), wobei diese Bewehrungen in einem Wickelwinkel von weniger als 55° aufgewickelt werden, und aus einer äußeren Dichtungshülse (6),

**dadurch gekennzeichnet,**

**dass** die Zwischenhülse (4) dicht ist und zwischen den beiden Bewehrungsgruppen (3, 5) angeordnet ist, wobei sich die innere Bewehrungsgruppe (3) in direkter Anlage an dem Druckgewölbe (2) befindet.

2. Rohrleitung nach Anspruch 1,

**dadurch gekennzeichnet,**

**dass** die innere Bewehrungsgruppe (3) in einem Wickelwinkel von mehr als 35° aufgewickelt ist.

3. Flexible Rohrleitung nach Anspruch 2,

**dadurch gekennzeichnet,**

**dass** die innere Bewehrungsgruppe (3) aus mindestens zwei Bewehrungsschichten (9, 10) besteht, die in entgegengesetzten Richtungen aufgewickelt sind, wobei der Wickelwinkel jeder Bewehrungsschicht mehr als 35° beträgt.

4. Flexible Rohrleitung nach Anspruch 1,

**dadurch gekennzeichnet,**

**dass** die äußere Bewehrungsgruppe (5) in einem Wickelwinkel von weniger als 30° aufgewickelt ist.

5. Flexible Rohrleitung nach den Ansprüchen 1 bis 4,

**dadurch gekennzeichnet,**

**dass** die äußere Bewehrungsgruppe (5) aus mindestens einer Bewehrungsschicht (11) besteht, die die gleiche Aufwickelrichtung hat wie die Bewehrungsschicht (3), die sich in direkter Anlage an dem Druckgewölbe (2) befindet.

6. Flexible Rohrleitung nach Anspruch 4,

**dadurch gekennzeichnet,**

**dass** die äußere Bewehrungsgruppe (5) aus mindestens zwei Bewehrungsschichten besteht, die in entgegengesetzten Richtungen aufgewickelt sind, wobei der Wickelwinkel jeder Bewehrungsschicht weniger als 30° beträgt.

7. Flexible Rohrleitung nach den Ansprüchen 3 und 6,

**dadurch gekennzeichnet,**

**dass** die Aufwickelrichtungen der Schichten (11, 12) der äußere Bewehrungsgruppe (5) jeweils die gleichen sind wie die Aufwickelrichtungen der Schichten (9, 10) der inneren Bewehrungsgruppe (3).

8. Flexible Rohrleitung nach einem der Ansprüche 1, 4 oder 5,

**dadurch gekennzeichnet,**

**dass** die äußere Bewehrungsgruppe (5) aus einer Wicklung einer Kohlenstofffaser oder Aramidfaser oder Polyaramidfaser besteht.

9. Flexible Rohrleitung nach einem der vorherigen Ansprüche,

**dadurch gekennzeichnet,**

**dass** die Steifheit des für die äußere Bewehrungsgruppe (5) verwendeten Materials größer ist als die Steifheit des für die innere Bewehrungsgruppe (3) verwendeten Materials.

10. Flexible Rohrleitung nach Anspruch 9,

**dadurch gekennzeichnet,**

**dass** das Verhältnis der genannten Steifheiten größer oder gleich 1 ist und vorzugsweise zwischen 1 und 4 liegt.

11. Flexible Rohrleitung nach Anspruch 1,

**dadurch gekennzeichnet,**

**dass** das Material der dichten Zwischenhülse (4) polymer ist.

## Claims

1. Flexible pipe comprising, from the inside outwards, a corrugated and sealed internal metal tube (1), a pressure vault (2) wound at a short pitch, having an internal surface which faces the corrugations of the said corrugated internal tube, an intermediate sheath, at least two groups of inner and outer armouring layers (3, 5), the said armouring layers being wound at a lay angle of less than 55°, and an outer-sheath (6), **characterised in that** the intermediate sheath (4) is sealed and is arranged between the two groups of armouring layers (3, 5), the said inner group of armouring layers (3) bearing directly on the pressure vault (2).

2. Pipe according to Claim 1, **characterised in that** the inner group of armouring layers (3) is wound with a lay angle of greater than 35°.

3. Flexible pipe according to Claim 2, **characterised in that** the inner group of armouring layers (3) consists of at least two armour layers (9, 10) wound in opposite directions, the lay angle of each group of armouring layers being greater than 35°.

4. Flexible pipe according to Claim 1, **characterised in that** the outer group of armouring layers (5) is wound with a lay angle of less than 30°.

5. Flexible pipe according to Claims 1 and 4, **characterised in that** the outer group of armouring layers (5) consists of at least one armour layer (11) the direction of winding of which is the same as for the armouring layer (9) that bears on the pressure vault (2) .

6. Flexible pipe according to Claim 4, **characterised in that** the outer group of armouring layers (5) consists of at least two armour layers wound in opposite directions, the lay angle of each armour layer being less than 30°.

7. Flexible pipe according to Claims 3 and 6, **characterised in that** the directions of winding of the layers (11, 12) of the outer group of armouring layers (5) are respectively the same as the directions of winding of the layers (9, 10) of the inner group of armouring layers (3).

8. Flexible pipe according to one of Claims 1, 4 or 5, **characterised in that** the outer group of armouring layers (5) consists of a winding of a carbon wire or an aramid or polyaramid wire.

9. Flexible pipe according to one of the preceding claims, **characterised in that** the stiffness of the material used for the outer group of armouring, layers (5) is greater than the stiffness of the material used for the inner group of armouring layers (3).

10. Flexible pipe according to Claim 9, **characterised in that** the ratio of the said stiffnesses is greater than or equal to 1 and is preferably between 1 and 4.

11. Flexible pipe according to Claim 1, **characterised in that** the material of the intermediate sheath (4) is a polymer material.

FIG_1

$\alpha 1 = 35° \, e1E1/evEv = 1$

FIG. 2

EP 0 937 933 B1

$\alpha 1 = 35°$ $\alpha 2 = 15°$ e1E1/evEv variable

FIG. 3

EP 0 937 933 B1